# EUROPEAN PATENT APPLICATION

(11) **EP 0 575 184 A1**
(43) Date of publication of application: **22.12.1993**
(21) Application number: 93304753.2
(22) Date of filing: 17.06.1993
(51) Int. Cl.: F02B 23/04

(54) **Diesel engines**

(30) Priority: 17.06.1992 GB 9212859
(71) Applicant: RICARDO CONSULTING ENGINEERS LIMITED, West Sussex BN43 5FG (GB)
(72) Inventor: Nightingale, David Ruffley, Upper Beeding, Sussex BN44 3TG (GB); Russell, Jack Trevor, East Preston, West Sussex BN16 1DY (GB)
(74) Representative: Jennings, Nigel Robin

(57) **Abstract**

A diesel engine of indirect injection type includes one or more cylinders (2), a piston (6) mounted to reciprocate therein, a cylinder head, a precombustion chamber (14) formed in the cylinder head which communicates with the interior of the cylinder via a throat (16), two inlet valves (8) and one or more exhaust valves (12) movably mounted within the cylinder head and a combustion enhancing compound recess (18) formed in the cylinder head. The compound recess comprises an elongate trough (20) which is in alignment with the throat and communicating with each side of it there is a part-circular recess (22). The compound recess is so dimensioned and positioned with respect to the valves (8,12) that when the valves are open at the top dead centre position of the piston two of them extend into the compound recess.

## Description

The present invention relates to diesel engines and is concerned with that type of diesel engine which has three or more valves, that is to say one or more inlet valves and one or more exhaust valves and is of the type known as indirect injection (IDI) engines, that is to say diesel engines which include a fuel injector arranged to inject fuel into a precombustion chamber which communicates via a throat with the main combustion chamber defined by the cylinder and the piston. In use, the ignition of the fuel occurs in the precombustion chamber and the burning fuel then discharges into the main combustion chamber where the combustion is completed.

The compression ratio of this type of diesel engine is relatively high and the piston crown thus approaches typically to within one millimetre or less from the cylinder head. Since it is necessary for both the inlet and exhaust valves to be partially open at the top dead centre position at the end of the exhaust stroke there is the potential problem of the valves engaging the piston crown. This is normally dealt with by recessing the valves into the cylinder head though it is also known that in such engines with one inlet valve and one exhaust valve recesses can be formed in the piston crown in positions corresponding to those of the valves. However, in such engines the two valves, and thus the recesses in the piston crown, are necessary positioned in that half of the cylinder opposed to that with which the precombustion chamber communicates. The recesses thus perform no combustion enhancing function and in fact do the reverse, that is to say they tend to destroy the swirling air pattern in the combustion chamber and thus reduce the combustion efficiency and result in increased exhaust emissions.

The total volume above the piston at the top dead centre position is determined by the required compression ratio but it is preferable that the greater proportion, e.g. more than 50%, of this volume should be contained in the precombustion chamber. The reason for this is that if the volume of the precombustion chamber is significantly less than this value the volume of air available for combustion in the precombustion chamber is reduced and the fuel/air ratio is increased with the result that smoke and emissions are increased and the power output is reduced.

It is also known in connection with IDI engines for the purpose of enhancing combustion efficiency to provide a recess in the piston crown. Such an engine typically includes a fuel injector arranged to inject fuel into a precombustion chamber which is defined in a cylinder head and into which a glow plug extends and which communicates with the main combustion chamber via a throat. Formed in the crown of the piston is a composite recess comprising an elongate trough, which is in alignment with the throat and communicating with each side of which is a somewhat shallower, part-circular recess. The valve seats are recessed into the cylinder head to provide the necessary mechanical clearance. In use, the burning air/fuel mixture in the precombustion chamber is discharged through the throat into the trough whence it splits into two contra-rotating swirl patterns in the part-circular recesses. As the piston moves downwardly, the swirl patterns progressively entrain air from the combustion chamber and the combustion is progressively spread uniformly throughout the entire combustion chamber.

IDI engines with a single exhaust valve and two inlet valves are becoming increasingly popular and such engines commonly have a recess in the piston crown, as described above, to enhance the combustion efficiency and each valve is recessed into the cylinder head. The recess in the piston crown must be of a certain minimum size to be effective and its volume together with the volume of the recesses for the valves necessarily take up a significant proportion of the total volume available above the piston, which as mentioned above, is determined by the compression ratio. This can result in the volume of the precombustion chamber occupying a smaller proportion of the total volume above the piston than is desirable which itself has a disadvantageous effect on the combustion efficiency.

The present invention is based on the recognition that by suitably adjusting the size and position of the recess in the piston crown and careful control of the valve design, the recess can serve not only its usual function but also the function of providing clearance for two of the valves, whereby these two valves do not need to be recessed into the cylinder head. This permits the voluem of the precombustion chamber and/or of the compound recess to be increased and thus the combustion efficiency to be increased also and the production of emissions to be reduced.

Thus according to the present invention a diesel engine includes at least one cylinder, a piston mounted to reciprocate therein, a cylinder head, a precombustion chamber formed in the cylinder head which communicates with the interior of the cylinder via a throat, three or more valves, comprising one or more inlet valves and one or more exhaust valves, movably mounted within the cylinder head and a compound combustion enhancing recess formed in the piston crown, the compound recess comprising an elongate trough which is in alignment with the throat and communicating with each side of which there is a part-circular recess and is characterised in that the compound recess is so dimensioned and positioned with respect to the valves that when the valves are open at the top dead centre position two of them extend into the compound recess.

Thus in the engine in accordance with the present invention two of the valves extend into the compound recess when the valves are open in the top dead centre position of the piston. Although the remaining valve or valves may still have to be recessed into the cylinder head in the usual manner, this means that the two valves in question do not require to be recessed into the cylinder head. This means in turn that a greater proportion of the available volume above the piston crown can be provided either in the compound recess in the piston crown or in the precombustion chamber so as to enhance the combustion efficiency.

In one embodiment the engine has two inlet valves and one exhaust valve and in this case either the two inlet valves or one inlet valve and one exhaust valve are positioned to extend into the compound recess. In a further embodiment of the invention the engine has two inlet valves and two exhaust valves and the two inlet valves are positioned to extend into the compound recess though the two exhaust valves or alternatively one inlet valve and one exhaust valve could be arranged to do so.

It is preferred that the precombustion chamber is of swirling type, that is to say the throat communicates with it generally tangentially whereby air that is caused to enter the chamber does so tangentially and is thus caused to swirl within it.

Further features and details of the invention will be apparent from the following description of three specific embodiments which is given by way of example with reference to the accompanying drawings, in which:-
Figure 1 is a scrap vertical sectional view of one embodiment of IDI engine in accordance with the invention with two inlet valves and one exhaust valve;
Figure 2 is a plan view of a piston of the engine of Figure 1;
Figure 3 is an underneath view of the cylinder head of the engine of Figure 1;
Figure 4 is a view similar to Figure 2 of a second embodiment of the invention; and
Figure 5 is a further view similar to Figure 2 of a third embodiment of the invention with two inlet valves and two exhaust valves.

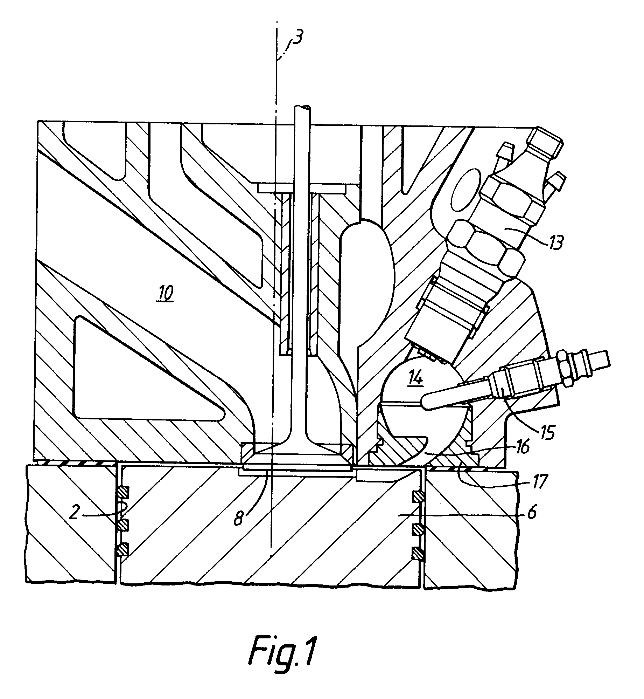

The IDI diesel engine shown in Figures 1 to 3 may have one or more cylinders but only one cylinder is illustrated and will be described. The cylinder 2 is closed by a cylinder head 4 and reciprocably accommodates a piston 6. Accommodated in the cylinder head are two inlet valves 8, which are arranged to open and close respective inlet ducts 10, and a single exhaust valve 12.

A precombustion chamber 14 is formed in the cylinder head 4 and communicates generally tangentially with one one end of a throat 16 whose other end communicates with the combustion chamber constituted by the interior of the cylinder. Communicating with the interior of the precombusion chamber 14 is a fuel injector 13 and a glow plug 15. The precombustion chamber 14 is constituted by a recess in the underside of the cylinder head 4 which is closed by an insert or plug 17 which defines the throat 16.

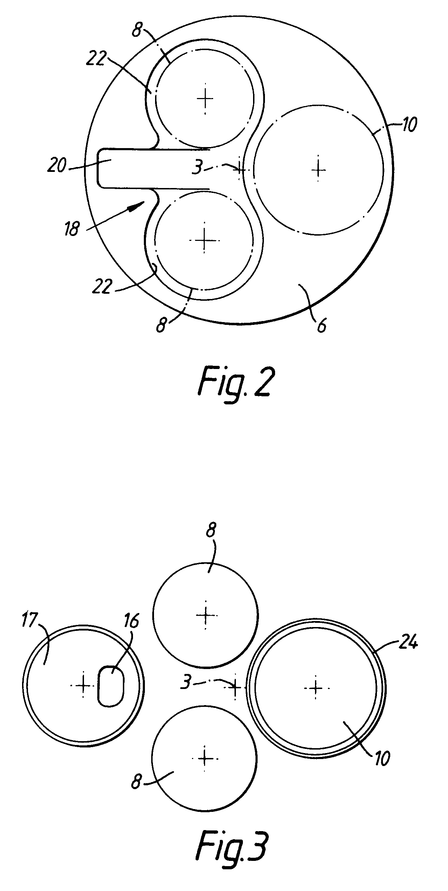

As best seen in Figure 2, a compound recess 18 comprising a relatively deep trough 20 which communicates on each side with a respective relatively shallow part-circular recess 22 is formed in the crown of the piston 6. The part-circular recesses 22 are dimensioned and positioned so that the heads of the inlet valves 8 may be received in them. The positions and sizes of the inlet and exhaust valves are shown in chain lines in Figure 2.

The two inlet valves 8, whose axes are within that half of the cylinder with which the combustion chamber communicates and are thus to the right of the cylinder axis 3 in Figure 1, are movable between a closed position in which their outer surface is substantially flush with the surface of the cylinder head, and an open position in which they project from the cylinder head by a distance greater than the clearance between the piston crown and the cylinder head at the top dead centre position (TDC). However, if the inlet valves are open when the piston is at TDC they are received in the recesses 22. The exhaust valve is not similarly received in a recess in the piston crown and it is therefore received within a recess 24 in the cylinder head at TDC. It is therefore movable between a closed position, in which it is retractecd significantly into the cylinder head, and an open position in which its outer surface is substantially flush with that of the cylinder head.

As mentioned above, the throat 16 communicates generally tangentially with the precombustion chamber 14, which is of generally circular shape in side view. Thus on the compression stroke of the piston, air is forced into the precombustion chamber and is induced to swirl or rotate in it about a generally horizontal axis. This results in uniform mixing of the fuel and air when the fuel is subsequently injected. The air/fuel mixture is then ignited in the usual manner and the burning mixture is discharged through the throat into the compound recess which enhances the combustion efficiency in the known manner described above. When the piston is next at TDC at the end of the exhaust stroke, all the valves are open and the inlet valves are received in the recesses 22 whilst the exhaust valve does not project significantly, if at all, from the cylinder head.

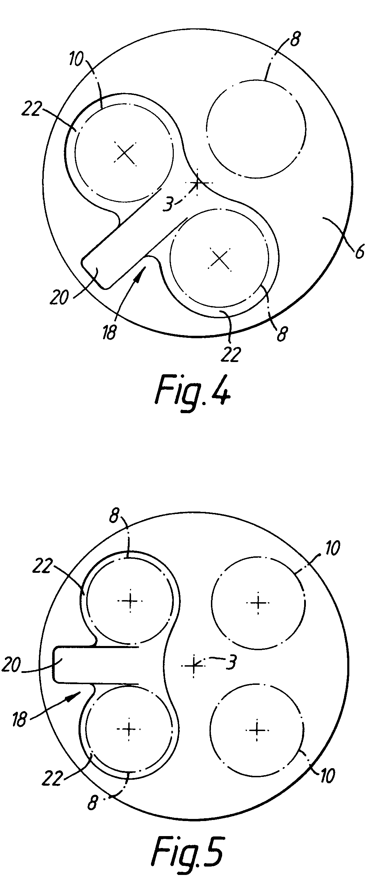

In the modified embodiment illustrated in Figure 4, space constraints have necessitated slightly rotationally offsetting the precombustion chamber and thus also the compound recess 18 relative to the valves. The engine again has two inlet valves and one exhaust valve per cylinder but in this case it is one inlet valve and one exhaust valve which are accommodated within the recesses 22 and the second inlet valve which must be recessed into the cylinder head.

The third embodiment illustrated in Figure 5 is again generally similar but in this case the engine has two inlet valves and two exhaust valves per cylinder. The two inlet valves 8 are positioned and dimensioned to be received in the recesses 22 and the two exhaust valves 10 are provided with respective recesses in the cylinder head.

## Claims

1. A diesel engine including at least one cylinder (2), a piston (6) mounted to reciprocate therein, a cylinder head (4), a precombustion chamber (14) formed in the cylinder head which communicates with the interior of the cylinder via a throat (16), three or more valves, comprising one or more inlet valves (8) and one or more exhaust valves (10), movably mounted within the cylinder head and a combustion enhancing compound recess (18) formed in the piston crown, the compound recess comprising an elongate trough (20) which is in alignment with the throat and communicating with each side of which there is a part-circular recess, characterised in that the compound recess (18) is so dimensioned and positioned with respect to the valves (8,10) that when the valves are open at the top dead centre position two of them extend into the compound recess.

2. An engine as claimed in claim 1 including two inlet valves (8) and one exhaust valve (10) characterised in that the two inlet valves (8) extend into the compound recess (18).

3. An engine as claimed in claim 1 including two inlet valves (8) and one exhaust valve (10), characterised in that one inlet valve (8) and the exhaust valve (10) extend into the compound recess (18).

4. An engine as claimed in claim 1 including two inlet valves (8) and two exhaust valves (10), characterised in that the two inlet valves (8) extend into the compound recess (18).

5. An engine as claimed in any one of the preceding claims characterised in that the precombustion chamber (14) is of swirling type, whereby the throat (16) communicates with it generally tangentially.
